# EUROPEAN PATENT APPLICATION

(11) **EP 1 176 069 A2**
(43) Date of publication of application: **30.01.2002**
(21) Application number: 01114752.7
(22) Date of filing: 22.06.2001
(51) Int. Cl.: B60S 1/34

(54) **Windshield wiper particularly for curved windshields of vehicles and the like**

(30) Priority: 06.07.2000 IT MI001532
(71) Applicant: OSLV ITALIA S.r.l., 64026 Roseto Degli Abruzzi (Teramo) (IT)
(72) Inventor: Di Marzio, Fausto, 64026 Roseto Degli Abruzzi (Termano) (IT); Berre', Domenico, 64026 Roseto Degli Abruzzi (Termano) (IT)
(74) Representative: Modiano, Guido, Dr.-Ing.

(57) **Abstract**

A windshield wiper for windshields having a curved surface, particularly for earth-moving machines and the like, comprising a first arm (1) and a second arm (2) which are rotatably connected, at one end, to a plate (3) which supports in a downward region a windshield wiper blade (5); the blade (5) is articulately connected to the plate (3) so that it can be always kept at right angles to the surface of the windshield to be wiped.

## Description

The present invention relates to a windshield wiper for curved windshields of vehicles and the like. More particularly the invention relates to a windshield wiper particularly suitable for curved windshields of earth-moving machines and the like.

It is known that in vehicle-related applications there is a growing tendency to increase as much as possible the surface of the windshields so as to enhance the viewing field of the driver or operator.

This need is leading vehicle manufacturers to produce windshields with curved surfaces, so as to be able to move the lateral posts as far back as possible in order to increase the viewing field of the operator.

This feature of curved windshields is particularly important as regards earth-moving machines, which have always traditionally had a small flat windshield.

This need to increase the viewing field has also led to the provision on these machines, of curved windshields, in which the curvature of the windshield is such that the windshield reaches a region which lies to the side of the operator.

Current windshield wipers used for windshields having a flat surface are no longer appropriate for adequately cleaning the surface of the windshield.

Current windshield wipers are in fact configured so as to make the wiper blade work in optimum conditions only on flat windshields, i.e., so that the wiping edge of the blade is held and moved at right angles to the windshield.

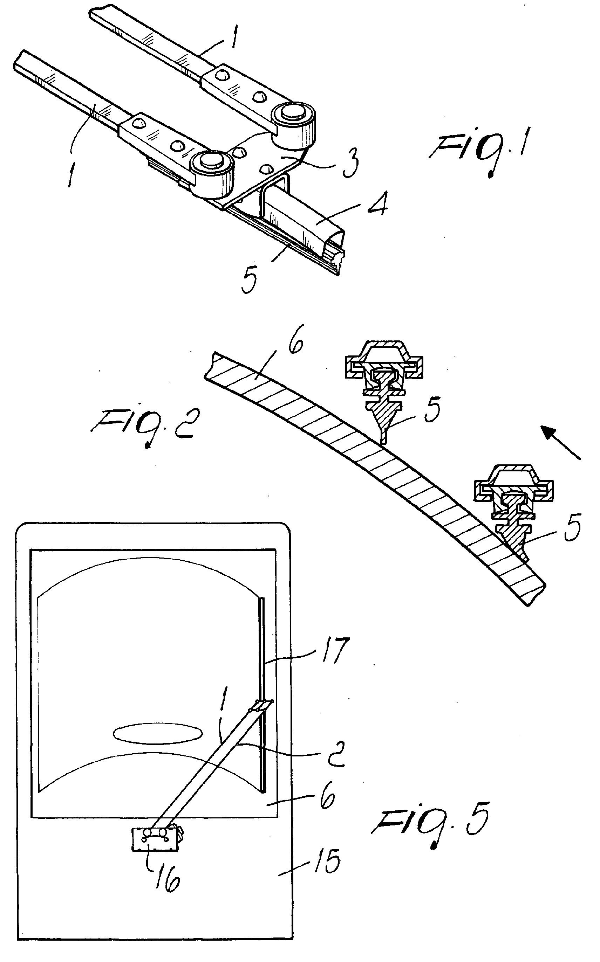

Figure 1 shows a conventional windshield wiper arm, which is formed by a sort of parallelogram with two parallel arms 1 and 2 articulated to a plate 3 which supports, in a downward region, a guide 4 for the wiping edge 5, which is designed to wipe the windshield.

The use of a windshield wiper of the type shown in Figure 1 for curved windshields entails that especially in the lateral regions of the windshield the wiping edge 5 does not work at right angles to the windshield, consequently degrading the quality of the wiping action and causing other anomalies, such as windshield scratches caused by the wiper body or by sand retained by the side of the wiping edge, noise of the wiper body due to knocking against the windshield, et cetera.

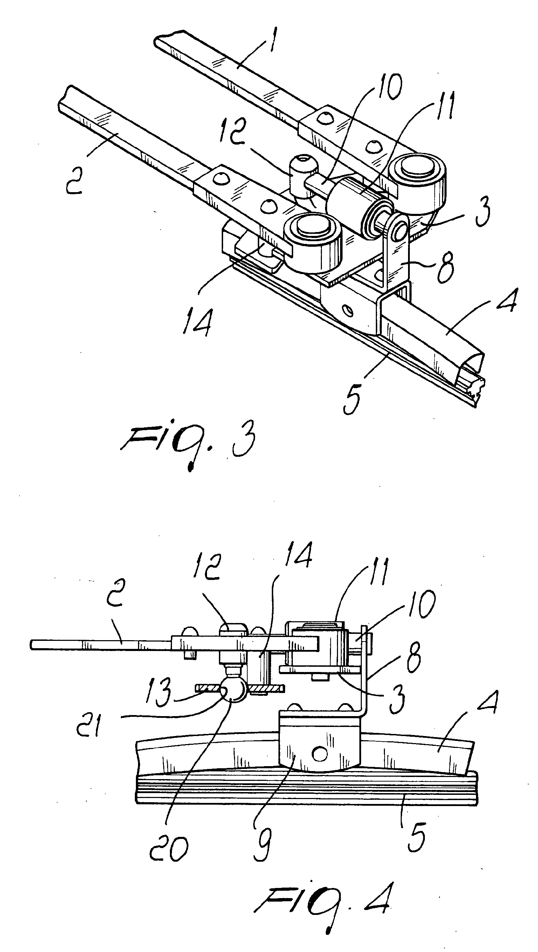

Figure 2 shows that in the lateral regions of the windshield 6 the wiping edge 5 does not work at right angles to the windshield.

The aim of the present invention is to provide a windshield wiper for curved windshields, particularly for vehicles and the like, which is capable of keeping the wiper blade always at right angles to the windshield in any point thereof.

Within this aim, an object of the present invention is to provide a windshield wiper for curved windshields which allows to achieve an optimum wiping action on the largest possible surface of the windshield.

Another object of the present invention is to provide a windshield wiper for curved windshields which does not scratch the windshield and does not produce noise by knocking on the windshield during its wiping action.

Another object of the present invention is to provide a windshield wiper for curved windshields which is highly reliable, relatively simple to manufacture and at competitive costs.

This aim and these and other objects which will become better apparent hereinafter are achieved by a windshield wiper for windshields having a curved surface, particularly for earth-moving machines and the like, comprising a first arm and a second arm which are rotatably connected, at one end, to a plate which supports in a downward region a windshield wiper blade, characterized in that said blade is articulately connected to said plate so that it can be always kept at right angles to the surface of the windshield to be wiped.

Further characteristics and advantages of the invention will become better apparent from the description of a preferred but not exclusive embodiment of the windshield wiper according to the invention, illustrated only by way of non-limitative example in the accompanying drawings, wherein:
Figure 1 is a partial perspective view of the arm of a known type of windshield wiper;
Figure 2 is a sectional view of a known type of windshield wiper which illustrates the drawbacks on a windshield having a curved surface;
Figure 3 is a perspective view of the windshield wiper according to the present invention;
Figure 4 is a side view of the windshield wiper according to the present invention; and
Figure 5 is a front elevation view of the cab of a vehicle with the windshield wiper according to the present invention applied thereto.

With reference to the figures, in which identical reference numerals designate identical elements, and particularly with reference to Figures 3 to 5, the windshield wiper according to the present invention comprises, in a similar fashion to what is shown in Figure 1, the previously described pair of arms 1 and 2, articulated to the plate 3 which in turn supports the guide 4 that accommodates the wiper blade 5.

The particularity of the invention consists in that it comprises means for the articulation of the wiper blade 5 with respect to the plate 3 for connecting the arms 1 and 2 of the windshield wiper.

In detail, the articulation means comprise an L-shaped plate-like element 8 rigidly connected to a connector 9 of the wiper blade 5 which firmly locks the blade.

The plate-like element 8 is suitably connected to the plate 3 by means of a pivot 10 which can rotate in a cylindrical seat 11, and the pivot 10 is rigidly connected to an additional pivot 12 arranged at right angles to the plate 3, differently from the pivot 10, which is parallel to the plate 3.

The pivot 12 is articulately coupled to an auxiliary bridge 13 which is rigidly coupled to the arms 1 and 2 by way of a through element 14 for each arm. In particular, the pivot 12 ends with a spherical end 20 which articulately engages a hole 21 of the auxiliary bridge 13.

In this manner, the relative movement between the connector 9 of the blade and the plate 3 of the arms 1 and 2 of the windshield wiper occurs by moving the pivot 12, which is rigidly coupled to the pivot 10.

The extent of the rotation of the connector 9 of the blade 5 on the axis of the pivot 10 is a function of the oscillation angle of the arm of the windshield wiper and of the relative distances between the plate 3, the auxiliary bridge 13 and the articulations of the arms 1 and 2 to the plate 3.

These distances are optimized appropriately according to the curvature radii of the windshield to be cleaned.

Figure 5 is a front elevation view of a cab 15 of an earth-moving machine; the reference numeral 6 illustrates the windshield to be wiped.

The reference numeral 16 designates the motor of the windshield wiper and the reference numeral 17 designates the windshield region that is wiped by the action of the windshield wiper blade 5.

By means of the articulation between the blade 5 and the arms 1 and 2 of the windshield wiper, it is possible to keep the blade 5 always in optimum contact with the windshield even if said windshield has a curved surface, as occurs increasingly frequently for example in earth-moving machines.

In practice it has been found that the windshield wiper according to the invention fully achieves the intended aim and objects, since it allows optimum windshield cleaning for any windshield surface, since the blade is always at right angles to the portion of windshield to be wiped.

Keeping the wiper always at right angles to the surface of the windshield avoids problems related to scratches caused by friction contact of the wiper body with the windshield surface or knocking noise due to possible skipping which the blade might perform on a curved windshield surface if the windshield wiper according to the present invention were not used.

The windshield wiper thus conceived is susceptible of numerous modifications and variations, all of which are within the scope of the same inventive concept; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2000A001532 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A windshield wiper for windshields having a curved surface, particularly for earth-moving machines and the like, comprising a first arm and a second arm which are rotatably connected, at one end, to a plate which supports in a downward region a windshield wiper blade, **characterized in that** said blade is articulately connected to said plate so that it can be always kept at right angles to the surface of the windshield to be wiped.

2. The device according to claim 1, **characterized in that** the articulated connection of said wiping blade to said plate comprises an L-shaped plate-like element which is adapted to connect to a connector of said blade, said plate-like element being connected by means of a first pivot to a second pivot which is articulately coupled to a connecting bridge which is rigidly coupled to said first and second arms.

3. The device according to claim 2, **characterized in that** said first pivot is adapted to rotate in a cylindrical seat located above said plate, between said first and second arms.

4. The device according to one or more of the preceding claims, **characterized in that** said second pivot is pivoted to said auxiliary bridge, said first and second arms being connected to said auxiliary bridge.

5. The device according to claim 4, **characterized in that** said second pivot ends, at one end, with a spherical element which is adapted to articulately engage a hole formed in said auxiliary bridge.
